(19) Europäisches Patentamt
European Patent Office
Office européen des brevets

(11) **EP 2 650 330 B1**

(12) **EUROPEAN PATENT SPECIFICATION**

(45) Date of publication and mention
of the grant of the patent:
**19.06.2019 Bulletin 2019/25**

(51) Int Cl.:
*F04B 15/00* (2006.01)   *C09K 3/10* (2006.01)
*C08L 23/16* (2006.01)   *C08L 91/00* (2006.01)

(21) Application number: **11847366.9**

(22) Date of filing: **29.11.2011**

(86) International application number:
**PCT/JP2011/077528**

(87) International publication number:
**WO 2012/077537 (14.06.2012 Gazette 2012/24)**

(54) **EPDM COMPOSITION**

EPDM-ZUSAMMENSETZUNG

COMPOSITION D'EPDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2010 JP 2010272147**

(43) Date of publication of application:
**16.10.2013 Bulletin 2013/42**

(73) Proprietor: **NOK Corporation
Tokyo 105-8585 (JP)**

(72) Inventors:
• **YAMANAKA, Takuya
Tokyo 105-8587 (JP)**
• **SUZUKI, Masahiro
Kariya-shi
Aichi 448-8671 (JP)**
• **KATO, Takayuki
Kariya-shi
Aichi 448-8671 (JP)**
• **HOSHIDA, Takahiro
Kariya-shi
Aichi 448-8671 (JP)**

• **TAKAMATSU, Masato
Kariya-shi
Aichi 448-8671 (JP)**
• **YASUDA, Shuichi
Kariya-shi
Aichi 448-8671 (JP)**

(74) Representative: **Hoffmann Eitle
Patent- und Rechtsanwälte PartmbB
Arabellastraße 30
81925 München (DE)**

(56) References cited:
EP-A1- 1 028 145     EP-A1- 2 011 823
EP-A1- 2 330 153     WO-A1-2010/098091
JP-A- 8 041 363      JP-A- 9 227 858
JP-A- 11 302 478     JP-A- 2000 256 493
JP-A- 2001 279 052   JP-A- 2001 354 828
JP-A- 2003 173 671   JP-A- 2007 071 123
JP-A- 2008 115 735   JP-A- 2008 121 634
US-A- 4 102 855      US-A- 5 073 597
US-A- 5 242 971      US-A- 5 910 544
US-A1- 2005 140 049

**Description**

TECHNICAL FIELD

The present invention relates to the use of an ethylene-propylene-diene copolymer (EPDM) composition as a moulding material for sealing materials having HFO-1234yf resistance.

BACKGROUND ART

HFC-134a (1,1,1,2-tetrafluoroethane) is used as a refrigerant in industrial and household freezers and refrigerators, household air-conditioners, car air-conditioners, etc. However, HFC-134a has a global warming potential (GWP) as high as 1,300; therefore, the replacement of HFC-134a by refrigerants with a low GWP is promoted. Recently, HFO-1234yf (2,3,3,3-tetrafluoro-1-propene), which is a hydrofluoroolefin with a GWP of 4 and an ozone layer depletion potential (ODP) of 0, shows great promise as a new refrigerant, and its practical use has been under consideration. HFO-1234yf has reached the final stage of commercialization as an alternative refrigerant for car air-conditioners as a result of the joint development of DuPont and Honeywell. The cooling capability and energy efficiency of HFO-1234yf only differ by 5% or less from those of HFC-134a.
For HFC-134a, which has been conventionally used as a refrigerant, an ethylene-propylene-diene copolymer type rubber (EPDM) or a hydrogenated nitrile rubber (HNBR) is used as a molding material for sealing materials (see Patent Document 1). Of these, EPDM has a high resistance to HFC-134a, but has inferior blister resistance in the environment of HFO-1234yf, which has been developed as a new refrigerant, as compared to the environment of HFC-134a. Nevertheless, EPDM ensures sealing properties during low-temperature vibration and has a cost advantage. For this reason, there is a demand for EPDM compositions as seal molding materials that can be sufficiently used in the HFO-1234yf environment.

PRIOR ART DOCUMENT

PATENT DOCUMENT

Patent Document 1 : WO 2006/137420
Patent Document 2 : JP-A-2007-92987
Patent Document 3 : WO 2008/078650

Other documents mentioning EPDM compositions that may contain a plasticizer include
EP 2 011 823 A, JP 2007 071123 A, WO 2010/098091 A1; US 5,910,544 A, US 5,242,971 A, US 4,102,855, and US 5,073,597. These documents do not mention HFO-1234yf.

OUTLINE OF THE INVENTION

PROBLEM TO BE SOLVED BY THE INVENTION

An object of the present invention is to provide a sealing material sufficiently usable in the HFO-1234yf environment.

MEANS FOR SOLVING THE PROBLEM

The above object of the invention can be solved by the use of an ethylene-propylene-diene copolymer (EPDM) composition as a moulding material for sealing materials having HFO-1234yf resistance, as defined in the claims.

EFFECT OF THE INVENTION

The EPDM composition according to the present invention has the following excellent effects. Because a paraffinic oil or naphthenic oil that is compatible with EPDM and has an absolute value of the difference between its solubility parameter (SP) value and the SP value of EPDM of 0.61 $(J/cm^3)^{1/2}$ (0.3 $(cal/cm^3)^{1/2}$) or less, preferably 0.41 $(J/cm^3)^{1/2}$ (0.2 $(cal/cm^3)^{1/2}$) or less,
is used as the plasticizer, a vulcanizate of the EPDM composition does not form defects that cause the starting point of blisters even when it is subjected to extraction by being brought into contact with HFO-1234yf. Accordingly, the vulcanizate, when used as a sealing material, particularly a compressor sealing material, exhibits excellent blister resistance to HFO-1234yf.

## EMBODIMENTS FOR CARRYING OUT THE INVENTION

As EPDM, any products obtained by copolymerization of ethylene and propylene with a small amount of various non-conjugated diene components can be used. Preferably, a product obtained by copolymerization with 5-ethylidene-2-norbornene, dicyclopentadiene, 1,4-hexadiene, or the like is used. The SP value thereof varies depending on the degree of polymerization, the type of diene, the amount of copolymerization, and other conditions; however, it is generally about 16.16 $(J/cm^3)^{1/2}$ (7.9 $(cal/cm^3)^{1/2}$) Practically, commercial products, such as EPT3045 (produced by Mitsui Chemicals, Inc.) and EP33 (produced by JSR Corporation), can be used as they are.

The SP value (solubility parameter) as used herein is explained in Patent Document 3 with reference to Polymer Handbook IV (pp. 341-368; published by Interscience Publishers) and Solvent Handbook (pp. 91-93 (1993); published by Kodansha Scientific Ltd.). This value can be determined by Small's method. According to Small's method, the SP value $\delta$ can be determined by the formula:

$$\delta = \rho \cdot \Sigma F/M$$

$\Sigma F$: total of all F values of atoms and groups in molecules or repeating units, proviso that F value is a molar-attraction constant (unit:
$(J/cm^3)^{1/2}/mol$ (($cal/cm^3)^{1/2}/mol$) at 25°C)
M: molecular weight, or molecular weight of repeating units
$\rho$: molecular density

The plasticizer used to improve the processability of EPDM is a paraffinic oil or naphtenic oil , in which the absolute value of the difference between the SP value of the plasticizer and the SP value of EPDM is 0.61 $(J/cm^3)^{1/2}$ (0.3 $(cal/cm^3)^{1/2}$) or less, preferably 0.41 $(J/cm^3)^{1/2}$ (0.2 $(cal/cm^3)^{1/2}$) or less. For example, a paraffinic oil having an SP value of 16.16 $(J/cm^3)^{1/2}$ (7.9 $(cal/cm^3)^{1/2}$), or a naphtenic oil having an SP value of 16.56 $(J/cm^3)^{1/2}$ (8.1 $(cal/cm^3)^{1/2}$) can be used. The use of a paraffinic oil or naphtenic oil in which the absolute value of the difference between its SP value and the SP value of EPDM is greater than this range as the plasticizer results in poor compatibility with EPDM. A vulcanizate thereof is likely to form defects because of extraction by being brought into contact with HFO-1234yf. Such the starting point of defects facilitate the formation of blisters. The SP value as used herein is a solubility parameter, and the present invention employs data determined by Small's formula.

As the paraffinic oil, which is a petroleum fraction product, commercial products that are generally used and satisfy the specified absolute value difference of the SP values can be used as they are. Examples thereof include Diana Process Oil PW-32, PW-150, and PW-380 (produced by Idemitsu Kosan Co., Ltd.); Super Oil M-10, M-12, M-22, M-32, M-46, M-68, M-100, M-150, and M-460 (produced by Shin-nippon Oil Corporation); Sunpar 107, 110, 115, 150, 2100, and 2280 (produced by Japan Sun Oil Co., Ltd.); and the like. Moreover, as the naphthenic oil, which is also a petroleum fraction product, commercial products that are generally used and satisfy the specified absolute value difference of the SP values can be used as they are. Examples thereof include Diana Process Oil NR-26, NR-68, and NM-280 (produced by Idemitsu Kosan Co., Ltd.); Sunthene 410, 415, 450, 480, 4130, 4240, and 250J (produced by Japan Sun Oil Co., Ltd.); and the like.

Although the technical field is different from that of the present invention, Patent Document 2 discloses a belt transmission device in which the friction transmission surface of a V-ribbed belt is composed of a rubber composition comprising 100 parts by weight of ethylene-$\alpha$-olefin (-diene) copolymer elastomer, 10 to 25 parts by weight of ether ester plasticizer, and 60 to 110 parts by weight of inorganic filler.

The solubility index of the ether ester plasticizer used in this composition is about 16.98 to 21.89 $(J/cm^3)^{1/2}$ (8.3 to 10.7 $(cal/cm^3)^{1/2}$) , which is greater than the solubility index of the ethylene-$\alpha$-olefin (-diene) copolymer elastomer (about16.36 $(J/cm^3)^{1/2}$ (8.0 $(cal/cm^3)^{1/2}$)). In addition to such an ether ester plasticizer, the combined use of a paraffinic or naphthenic petroleum-based plasticizer having a solubility index of 12.27 to 16.56 $(J/cm^3)^{1/2}$ (6.0 to 8.1 $(cal/cm^3)^{1/2}$), which is almost equal to or less than the solubility index of the ethylene-$\alpha$-olefin (-diene) copolymer elastomer, has the following effects:

(a) The water leakage properties of the friction transmission surface are improved
(b) When pouring water, the tightly adhesion of the belt to the pulley is enhanced to improve silence performance

(c) Moderate bleeding properties are provided, and sound generation during running can be suppressed by the action of the plasticizer as a lubricant

(d) The formation of cracks on the friction transmission surface can be prevented so that the durability of the belt is increased

However, when an ether ester plasticizer is used as the plasticizer, blister resistance to hydrofluoroolefin refrigerants is not sufficient, as shown in Comparative Example 3, described later. Furthermore, the Example of Patent Document 2 uses a paraffinic oil having a solubility index of 15.34 $(J/cm^3)^{1/2}$ (7.5 $(cal/cm^3)^{1/2}$), in addition to an ether ester plasticizer. Even when such a paraffinic oil is used alone, blister resistance to hydrofluorocarbon refrigerants is not sufficient either, as shown in Comparative Example 1, described later.

The amount of paraffinic oil or naphthenic oil in which the absolute value of the difference between its SP value and the SP value of EPDM is 0.61 $(J/cm^3)^{1/2}$ (0.3 $(cal/cm^3)^{1/2}$) or less, which is used as the plasticizer, is 5 to 40 parts by weight, preferably 5 to 25 parts by weight, based on 100 parts by weight of EPDM. When the amount of paraffinic oil or naphthenic oil added is less than this range, the desired plasticizing effect cannot be obtained. In contrast, when the amount is greater than this range, foaming occurs.

In addition to the above essential components, the EPDM composition may contain, if necessary, various reinforcing agents or fillers, such as carbon black and white carbon; oxides or hydroxides of divalent metals, such as zinc oxide and magnesium oxide; acid acceptors, such as hydrotalcite compounds; antioxidants; and other compounding agents generally used in the rubber industry.

The EPDM composition comprising the above components is peroxide-crosslinked using an organic peroxide that is generally used in an amount of 0.2 to 8 parts by weight based on 100 parts by weight of EPDM. As the organic peroxide, those that can generally be used for crosslinking of EPDM can be used without limitation. Examples of such organic peroxides include tert-butyl peroxide, dicumyl peroxide, tert-butylcumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexyne-3, and the like. Furthermore, for the organic peroxide crosslinking, the combined use of a crosslinking aid comprising a polyfunctional unsaturated compound, typified by triallyl isocyanurate, is preferred.

The preparation of the composition is performed by kneading the above components using a kneader (e.g., intermix, kneader, or Banbury mixer) or an open roll. The kneaded product is subjected to vulcanization molding using an injection-molding machine, compression-molding machine, vulcanizing press, or the like, by heating generally at about 150 to 200°C for about 2 to 60 minutes. The resultant is further, if necessary, subjected to oven vulcanization (secondary vulcanization) at about 100 to 200°C for about 1 to 24 hours.

The resulting vulcanizate is suitably used as a sealing material (e.g., a compressor sealing material) used for being in contact with a hydrofluoroolefin refrigerant (e.g., HFO-1234yf).

EXAMPLES

The following describes the present invention with reference to Examples.

Example 1

| | |
|---|---|
| EPDM (EPT3045, produced by Mitsui Chemicals, Inc.; | 100 parts by weight |
| SP value: 16.16 (7.9) SRF carbon black (average particle size: 70 nm) | 60 parts by weight |
| Paraffinic plasticizer (Sunpar 110, produced by Japan Sun Oil Co., Ltd.; SP value: 16.16 (7.9) | 20 parts by weight |
| Antioxidant (Antage RD, produced by Kawaguchi Chemical Industry Co., Ltd.) | 1 part by weight |
| Dicumyl peroxide | 4 parts by weight |

The above components were kneaded with a kneader and an open roll. The kneaded product was subjected to press vulcanization in a vulcanizing press at 170°C for 15 minutes, and oven vulcanization (secondary vulcanization) at 150°C for 5 hours. Thus, an O-ring of size G25 (internal diameter: 22.4 mm, and wire diameter: 3.1 mm) was obtained.

Example 2

In Example 1, the same amount of a naphthenic plasticizer (Sunthene 410, produced by Japan Sun Oil Co., Ltd.; SP value 16.56 (8.1) was used as the plasticizer.

Comparative Example 1

In Example 1, the same amount of a paraffinic plasticizer (Diana Process Oil PW-90, produced by Idemitsu Kosan Co., Ltd..; SP value 15.34 (7.5) was used as the plasticizer.

Comparative Example 2

In Example 1, the same amount of a naphthenic plasticizer (Sunthene 430, produced by Japan Sun Oil Co., Ltd.; SP value 14.32 (7.0) was used as the plasticizer.

Comparative Example 3

In Example 1, the same amount of an ether ester plasticizer (ADK Cizer RS700, produced by Adeka Corporation; SP value 18.20 (8.9) was used as the plasticizer.

Comparative Example 4

In Example 1, the same amount of di-2-ethylhexyl phthalate (Taoka Chemical Co., Ltd.; SP value 18.41 (9.0) was used as the plasticizer.

Comparative Example 5

In Example 1, the same amount of an aliphatic polyester plasticizer (Polycizer P-202, produced by DIC Corporation; SP value 18.41 (9.0) was used as the plasticizer.

A blister test was conducted on the G25 O-rings obtained in the above Examples and Comparative Examples.

Blister test: The O ring and a liquefied refrigerant (HFO-1234yf) were enclosed in a pressure vessel, and the O ring was immersed in the liquefied refrigerant at 40°C for 24 hours. After releasing the air, the O ring was taken out and air-heated in a 150°C thermostatic chamber for 1 hour. Thereafter, the O ring was cut, and the presence of blisters in the cross-section was visually observed.

The results confirmed that in Examples 1 and 2, in which a paraffinic oil or naphthenic oil having an absolute value of the difference between its SP value and the SP value of EPDM of 0.41 $(J/cm^3)^{1/2}$ (0.2 $(cal/cm^3)^{1/2}$) or less was added as the plasticizer, and no ether ester plasticizer was added, blister formation was not observed, indicating superior blister resistance; whereas in Comparative Examples 1 to 5, in which an ether ester plasticizer, or a paraffinic plasticizer or naphthenic plasticizer having an absolute value of the difference between its SP value and the SP value of EPDM of greater than 0.61 $(J/cm^3)^{1/2}$ (0.3 $(cal/cm^3)^{1/2}$) was added, blister formation was observed, indicating inferior blister resistance.

**Claims**

1. Use of an ethylene-propylene-diene copolymer (EPDM) composition as a moulding material for sealing materials having HFO-1234yf resistance,
   wherein said EPDM composition is formed by crosslinking using an organic peroxide; and
   wherein the EPDM composition contains a plasticizer in an amount of 5 to 40 parts by weight based on 100 parts by weight of EPDM; and
   wherein the plasticizer is a paraffinic oil or naphthenic oil in which the absolute value of the difference between its solubility parameter value $\delta$ and the solubility parameter value $\delta$ of EPDM is 0.61 $(J/cm^3)^{1/2}$ (0.3 $(cal/cm^3)^{1/2}$) or less; and
   wherein the composition is free of an ether ester plasticizer; and
   wherein the solubility parameter value $\delta$ is determined by the formula

$$\delta = \rho \Sigma F / M$$

   wherein $\Sigma F$ is the total of all F values of atoms and groups in molecules or repeating units, wherein the F value is a molar attraction constant in $(J/cm^3)^{1/2}/mol$ $((cal/cm^3)^{1/2}/mol)$ at 25°C;
   M is the molecular weight or the molecular weight of repeating units and

$\rho$ is the molecular density.

2. Use of the EPDM composition according to claim 1, wherein the paraffinic oil or naphthenic oil has an absolute value of the difference between the solubility parameter values of 0.41 $(J/cm^3)^{1/2}$ (0.2 $(cal/cm^3)^{1/2}$) or less.

3. Use of the EPDM composition according to claim 1 or 2, wherein the plasticizer is used in an amount of 5 to 25 parts by weight based on 100 parts by weight of EPDM.

4. Use of the EPDM composition according to any one of claims 1 to 3 in a compressor which is in contact with HFO-1234yf.

**Patentansprüche**

1. Verwendung einer Ethylen-Propylen-Dien-Copolymer (EPDM)-Zusammensetzung als ein Formmaterial für Dichtungsmaterialen mit HFO-1234yf-Beständigkeit,
worin die EPDM-Zusammensetzung gebildet ist durch Vernetzung unter Verwendung eines organisches Peroxids; und
worin die EPDM-Zusammensetzung ein Plastifiziermittel in einer Menge von 5 bis 40 Gew.-Teilen enthält, bezogen auf 100 Gew.-% an EPDM; und
worin das Plastifiziermittel ein paraffinisches Öl oder naphthenisches Öl ist, worin der Absolutwert des Unterschieds zwischen dessen Löslichkeitsparameterwerts $\delta$ und dem Löslichkeitsparameterwert $\delta$ des EPDM 0,61 $(J/cm^3)^{1/2}$ (0,3 $(kal/cm^3)^{1/2}$) oder weniger beträgt; und
worin die Zusammensetzung kein Ether-Ester-Plastifiziermittel enthält; und
worin der Löslichkeitsparameterwert $\delta$ bestimmt wird durch die Formel

$$\delta = \rho \Sigma F / M$$

worin $\Sigma F$ die Gesamtheit aller F-Werte der Atome und Gruppen in Molekülen oder Wiederholungseinheiten ist,
worin der F-Wert eine molare Anziehungskonstante in $(J/cm^3)^{1/2}/mol$ $((kal/cm^3)^{1/2}/mol)$ bei 25°C ist;
M das Molekulargewicht oder das Molekulargewicht der Wiederholungseinheiten ist, und
$\rho$ die molekulare Dichte ist.

2. Verwendung der EPDM-Zusammensetzung gemäß Anspruch 1, worin das paraffinische Öl oder das naphthenische Öl einen Absolutwert des Unterschieds zwischen den Löslichkeitsparameterwerten von 0,41 $(J/cm^3)^{1/2}$ (0,2 $(kal/cm^3)^{1/2}$) oder weniger aufweist.

3. Verwendung der EPDM-Zusammensetzung gemäß Anspruch 1 oder 2, worin das Plastifiziermittel in einer Menge von 5 bis 25 Gew.-Teilen verwendet wird, bezogen auf 100 Gew.-Teile an EPDM.

4. Verwendung der EPDM-Zusammensetzung gemäß irgendeinem der Ansprüche 1 bis 3 in einem Kompressor, der in Kontakt mit HFO-1234yf ist.

**Revendications**

1. Utilisation d'une composition de copolymère éthylène-propylène-diène (EPDM) en tant que matériau de moulage pour étanchéifier des matériaux ayant une résistance à HFO-1234yf,
dans laquelle ladite composition d'EPDM est formée par réticulation en utilisant un peroxyde organique ; et
dans laquelle la composition d'EPDM contient un plastifiant en une quantité de 5 à 40 parties en poids sur la base de 100 parties en poids d'EPDM ; et
dans laquelle le plastifiant est une huile paraffinique ou une huile naphténique dans laquelle la valeur absolue de la différence entre sa valeur de paramètre de solubilité $\delta$ et la valeur de paramètre de solubilité $\delta$ de l'EPDM est de 0,61 $(J/cm^3)^{1/2}$ (0,3 $(cal/cm^3)^{1/2}$) ou moins ; et
dans laquelle la composition est exempte d'un plastifiant ester d'éther ; et
dans laquelle la valeur de paramètre de solubilité $\delta$ est déterminée par la formule

$$\delta = \rho \Sigma F / M$$

dans laquelle $\Sigma F$ est le total de toutes les valeurs F d'atomes et groupes dans des molécules ou des motifs de répétition, dans laquelle la valeur F est une constante d'attraction molaire en $(J/cm^3)^{1/2}/mol$ $((cal/cm^3)^{1/2}/mol)$ à 25 °C ;
M est la masse moléculaire ou la masse moléculaire de motifs de répétition et
$\rho$ est la densité moléculaire.

2. Utilisation de la composition d'EPDM selon la revendication 1, dans laquelle l'huile paraffinique ou l'huile naphténique a une valeur absolue de la différence entre les valeurs de paramètre de solubilité de 0,41 $(J/cm^3)^{1/2}$ (0,2 $(cal/cm^3)^{1/2}$) ou moins.

3. Utilisation de la composition d'EPDM selon la revendication 1 ou 2, dans laquelle le plastifiant est utilisé en une quantité de 5 à 25 parties en poids sur la base de 100 parties en poids d'EPDM.

4. Utilisation de la composition d'EPDM selon l'une quelconque des revendications 1 à 3 dans un compresseur qui est en contact avec HFO-1234yf.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006137420 A
- JP 2007092987 A
- WO 2008078650 A
- EP 2011823 A
- JP 2007071123 A
- WO 2010098091 A1
- US 5910544 A
- US 5242971 A
- US 4102855 A
- US 5073597 A

### Non-patent literature cited in the description

- Polymer Handbook. Interscience Publishers, vol. IV, 341-368
- Solvent Handbook. Kodansha Scientific Ltd, 1993, 91-93